# DEMANDE DE BREVET EUROPEEN

(11) **EP 0 683 018 A1**
(43) Date de publication de la demande: **22.11.1995**
(21) Numéro de dépôt: 95401140.9
(22) Date de dépôt: 17.05.1995
(51) Int. Cl.: B25J 9/16

(54) **Procédé de génération d'une trajectoire d'outil sur une surface d'une pièce**

(30) Priorité: 19.05.1994 FR 9406117
(71) Demandeur: COMMISSARIAT A L'ENERGIE ATOMIQUE, F-75015 Paris (FR)
(72) Inventeur: Detriche, Jean-Marie, F-78590 Noisy-Le-Roi (FR)
(74) Mandataire: Dubois-Chabert, Guy

(57) **Abrégé**

Procédé de génération d'une trajectoire composée de points (16) sur la surface d'une pièce (10) . On reconnaît des zones irrégulières (15) entre des limites (17) pour lesquelles la modélisation de la trajectoire n'a pas pu être menée de façon satisfaisante, et on retire ces parties de la trajectoire pour les réserver à un procédé spécial. La trajectoire peut parfois être remodelée grâce à des points complémentaires (18) obtenus sur le contour souhaité. L'invention s'applique à l'ébavurage et à des opérations telles que la peinture, le polissage, le soudage accomplies par un robot.

## Description

L'invention concerne un procédé de génération d'une trajectoire d'outil sur une surface d'une pièce.

Certaines opérations d'usinage ou de traitement de surface imposent de déplacer un outil sur une trajectoire bien définie à la surface de la pièce. C'est le cas de l'ébavurage qui constitue une application importante de l'invention, mais aussi du polissage, de la peinture ou du soudage, ou encore d'autres procédés. La trajectoire est alors soit une ligne de contour de la pièce au plan de joint des matrices de moulage, soit le joint entre deux pièces, soit une série de lignes parallèles, sans exclure d'autres choix.

Ces opérations requièrent un temps de main-d'oeuvre important et sont souvent pénibles, ce qui explique qu'il soit avantageux de les faire accomplir par des robots. Mais la programmation des robots est difficile à cause des formes irrégulières de nombreuses pièces et de leurs variations de dimensions dans une même série de pièces supposées identiques. Ces variations peuvent affecter les pièces elles-mêmes à causes d'incertitudes provenant du procédé de fabrication. Notamment dans le cas de l'ébavurage, elles sont particulièrement importantes pour les bavures, dont la position, la largeur et l'épaisseur varient fortement et de façon imprévisible autour d'une même pièce. Il est difficile d'exécuter automatiquement une trajectoire dans de telles conditions tout en obtenant un résultat satisfaisant. Si l'outil est un outil classique de coupe, il peut être soulevé de la surface de la pièce ou au contraire appliqué avec un effort excessif, susceptible de le rompre ou de l'endommager, si la trajectoire du modèle de la pièce est suivie aveuglément en ignorant les écarts de dimension dont elle témoigne dans la réalité par rapport à ce modèle.

On peut indiquer au robot des corrections de la trajectoire du modèle, appelées recalages, pour suivre le contour réel de chaque pièce. On recourt pour cela à des palpages du contour par un engin appelé syntaxeur mécanique ou par l'outil lui-même, ou à des systèmes optiques de reconnaissance de forme. On reviendra sur ces moyens dans la suite du texte pour les décrire et pour expliquer en quoi ils ne sont pas complètement satisfaisants. Les recalages ont donc pour effet de fournir au robot une trajectoire réelle corrigée à suivre de-préférence à la trajectoire modèle théorique qui représente une modélisation générale mais relativement imprécise des pièces.

Un procédé d'ébavurage connu consiste alors à parcourir la trajectoire corrigée par recalage tout en appliquant l'outil sur le contour de la pièce et en attaquant la bavure en mesurant l'effort de coupe. Quand cet effort devient excessif, ce qui témoigne d'une bavure bloquante, on réduit la vitesse d'avance de l'outil, et on peut en dernier ressort éloigner l'outil de la trajectoire corrigée par recalage pour contourner les plus grosses parties de la bavure. Mais ce procédé n'est pas applicable aux situations où la bavure est très épaisse ou s'il existe une excroissance plus massive telle qu'une carotte de coulée, car l'outil d'ébavurage convient alors mal ou ne convient pas du tout et doit être remplacé par une étape d'usinage plus énergique, de fraisage ou de tronçonnage.

Il est difficile d'indiquer la trajectoire à suivre dans de telles situations à l'aide d'un palpeur ou d'un autre instrument de mesure, quand il s'agit tantôt du contour de la pièce tantôt de portions d'évitement, qui ne sont pas séparées bien nettement.

Il ne faut donc pas espérer en pratique obtenir des résultats satisfaisants avec un procédé entièrement automatisé. L'idée de base de l'invention consiste alors à soustraire à l'automatisation certaines étapes. Plus concrètement, on procède avant le procédé principal à une nouvelle définition ou à un remodelage de la trajectoire dans laquelle les endroits de la pièce qui sont reconnus comme réfractaires à ce procédé sont exclus de la trajectoire, ou encore les endroits de la pièce qui doivent subir un procédé supplémentaire spécifique sur certaines portions de la trajectoire (exemples : le tronçonnage, la finition).

Sous sa forme la plus générale, l'invention correspond donc à un procédé de génération d'une trajectoire à parcourir par un outil porté par un robot sur une surface d'une pièce, comprenant :
· une création d'une modélisation de la trajectoire par des tronçons :
· un recalage de la modélisation de la trajectoire par une reconnaissance de la position de la pièce au moyen d'un instrument de recalage, afin d'obtenir une modélisation recalée ;
· une définition de points de représentation de la trajectoire au moyen de la modélisation recalée ;

caractérisé en ce qu'il comprend encore :
· une reconnaissance visuelle d'endroits irréguliers de la surfaces par lesquels la trajectoire passe ;
· une désignation des endroits irréguliers par des points de limite au moyen d'un instrument de désignation ;
· une projection des points de limite sur la trajectoire ;
· une réfection de la modélisation recalée en arrêtant les tronçons aux points de limite.

Les endroits irréguliers correspondent à des zones réfractaires à l'action ordinaire de l'outil, notamment à des zones qui lui sont inaccessibles ou sont trop résistantes. Il peut s'agir de bavures de grande tailles, appelées bavures bloquantes, pour les procédés d'ébavurage. On peut distinguer les endroits irréguliers en deux catégories : ceux qui correspondent à un écart excessif entre la trajectoire qu'il convient de suivre et le contour local réel de la pièce (cas des bavures bloquantes), et ceux qui correspondent à des tâches particulières (telles que le tronçonnage ou une finition) à accomplir par un autre outil, voire le même outil mais dans des -conditions spéciales, sans que la trajectoire à suivre diffère nettement du contour local de la pièce.

Les aménagements particuliers du procédé correspondant à certaines situations concrètes vont ressortir de la description détaillée d'une réalisation particulière du procédé qui va suivre et qui est donnée à titre illustratif.

On se fondera désormais sur les figures suivantes :
· la figure 1 représente l'organisation générale du système,
· la figure 2 représente la trajectoire sur la pièce,
· la figure 3 illustre un instrument de désignation de points,
· la figure 4 illustre un autre instrument de désignation de points,
· la figure 5 représente une modélisation de trajectoire,
· la figure 6 illustre le recalage de la modélisation,
· et la figure 7 illustre une réfection de modélisation de trajectoire.

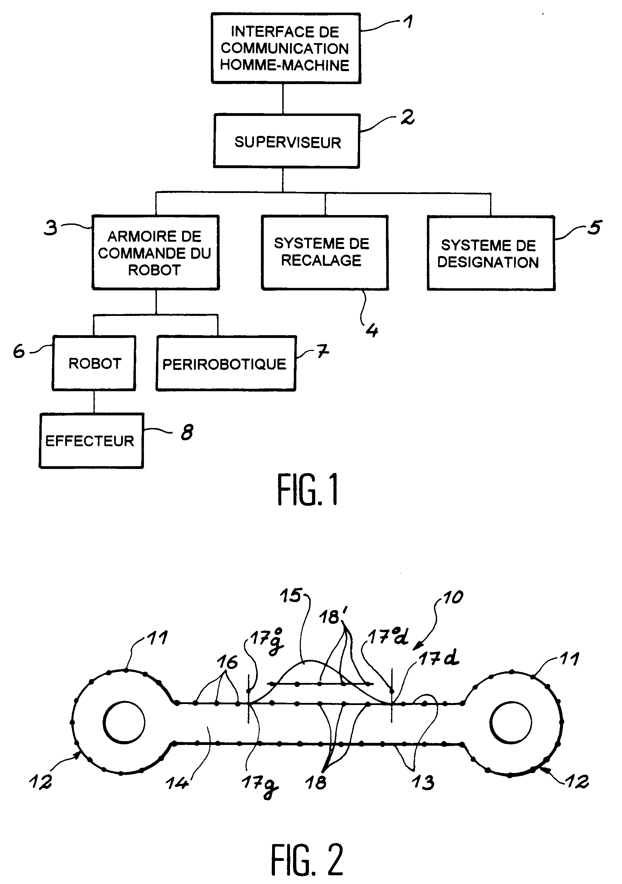

Le système envisagé pour la mise en oeuvre de l'invention comprend, considéré dans son organisation détaillée à la figure 1, une interface 1 de communication entre l'homme et la machine, un superviseur 2 relié à l'interface 1 et qui donne accès à l'armoire de commande 3 du robot, à un système de recalage 4 et à un système de désignation 5 ; l'armoire de commande 3 permet d'accéder au robot 6 et à une périrobotique 7 ; enfin, un effecteur 8 (il s'agit ici de l'outil d'usinage) est relié au robot 6.

L'interface 1 est composée de moyens usuels tels qu'un clavier à touches et un écran et permet d'accéder aux autres éléments du système pour les commander. Le superviseur 2 est un intermédiaire de traitement des données qu'il reçoit et transmet entre l'interface 1 et les autres éléments du système auquel il est relié, et de conversion de ces données entre le langage de la machine et celui que l'opérateur utilise. L'armoire de commande 3 convertit les instructions relatives au fonctionnement du robot 6 en mouvements des articulations de celui-ci et en autres commandements de ses organes. La périrobotique 7, qui n'est pas toujours présente, peut consister en un système de positionnement ou de bridage automatique de la pièce à usiner.

Ce sont les systèmes de recalage 4, de désignation 5 et de supervision 2 qui contribuent plus spécialement à l'invention ; ils seront plus décrits dans la suite de ce texte.

La première étape du procédé est une création de la trajectoire réelle. Cette étape est menée de façon classique par un procédé de palpage de points caractéristique du contour d'une pièce à ébavurer.

Elle peut en pratique consister en une correction d'une trajectoire de modélisation apprise à l'armoire de commande 3 préalablement. Cette trajectoire de modélisation consiste en un fichier de points de passage de l'outil. Le palpage permet d'obtenir un second fichier de points constituant une trajectoire modifiée correspondant à la trajectoire réelle. Chaque point du second fichier est associé à un point du premier fichier, dont on calcule la distance par leurs différences de coordonnées, ce qui permet de déduire les corrections de position à attribuer aux articulations du bras de robot 6 pour qu'il suive la trajectoire réelle.

On a illustré (à la figure 2) le cas d'une bielle 10 produite par un moulage avec un plan de joint qui la divise en deux moitiés et s'étend à mi-épaisseur. Le contour à ébavurer comprend donc les bords extérieurs circulaires 11 des manetons 12 et les bords 13 de la tige 14. Des bavures se rencontrent de façon aléatoire sur le contour. Elles sont généralement de petites dimensions et on ne les a pas représentées, mais il existe une bavure de grande taille 15 qu'il n'est pas possible de supprimer commodément.

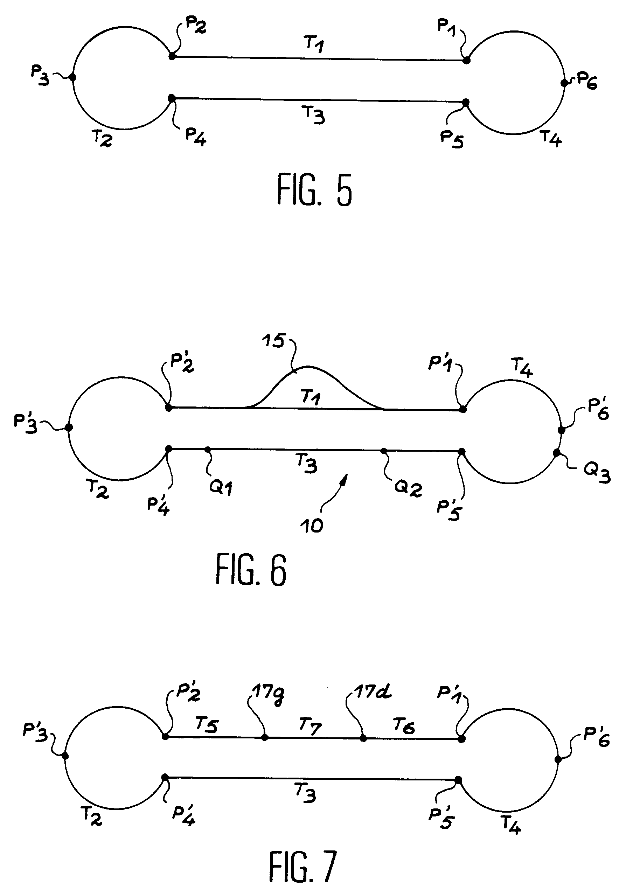

Une modélisation donnant la trajectoire théorique est schématisée à la figure 5 et peut provenir d'une programmation à partir de plans de bureau d'étude. Elle comprend quatre tronçons T₁ à T₄ et six points P₁ à P₆, qu'on a numérotés dans un ordre possible de parcours par l'effecteur 8. Les tronçons T₁ et T₃ sont des segments droits limités respectivement par les points P₁ et P₂, et P₄ et P₅ ; ils correspondent aux bords 13 dé la tige 14. Les tronçons T₂ et T₄ sont des arcs de cercle limités respectivement par les points P₂ et P₄ et P₅ et P₁ ; ils correspondent aux bords extérieurs circulaires 11 des manetons 12 et sont encore définis respectivement par les points P₃ et P₆ qui peuvent être à mi-longueur. Le fichier de modélisation comprend donc les coordonnées des points P₁ à P₆ et les informations sur la nature et les points de limite et de définition des tronçons T₁ à T₄. Il est alors possible de faire parcourir tout le contour de la bielle 10 par l'effecteur 8, mais seulement après quelques opérations supplémentaires.

Tout d'abord, les coordonnées des points P₁ à P₆ ne sont normalement pas représentatives de la position réelle de la bielle 10 dans le champ d'action du robot. On procède au palpage de la bielle 10 pour découvrir la relation entre la modélisation et la pièce réelle. Un instrument de palpage décrit plus loin va toucher ou reconnaître d'une autre manière quelques points du contour de la bielle 10, trois (Q₁ à Q₃) dans le cas présent, et à relever leurs coordonnées dans le repère du robot. Ces points de palpage peuvent être quelconques à condition d'être choisis sur des endroits réguliers du contour, hors de bavures en particulier, et en pratique hors des régions peu accessibles par l'instrument de palpage.

Le recalage de la modélisation consiste à modifier les coordonnées des points P₁ à P₆ par des translations et de rotation d'ensemble du modèle jusqu'à ce que les points Q₁ à Q₃ soient reconnus comme appartenant aux tronçons T₁ à T₄ (ici, Q₁ et Q₂ appartiennent à T₃ et Q₃ à T₄). La modélisation recalée comprend, au lieu des points P₁ à P₆, des points P'₁ à P'₆ dont les coordonnées, exprimées dans le repère du robot, font qu'ils sont placés sur le contour de la bielle 10, à peu de chose près, sauf si le contour présente une bavure à ces endroits.

Le palpage des bords 11 et 13 est suivi d'un calcul des coordonnées de points de recalage 16 comme représentation de la trajectoire réelle de l'outil. Les points de représentation 16 ne correspondent généralement pas aux endroits effectifs de palpage mais à des points séparés de distances à peu près égales et obtenus par des interpolations entre les points de modélisation P'1 à P'6 corrigés par le recalage. Les points de représentation 16 sont généralement calculés à mesure de l'avance de l'effecteur 8 pendant l'usinage. On s'aperçoit que si la plupart des points de représentation 16 sont situés effectivement sur le contour réel de la bielle 10 ou près de celui-ci, ceux qui sont situés à l'endroit de la grande bavure 15, c'est-à-dire plus précisément sur son bord ou sa crête, en sont bien éloignés. La conséquence est que la méthode d'usinage classique, consistant à appliquer l'outil avec un effort constant sur la matière avoisinant la trajectoire et qui suffit à supprimer totalement les petites bavures et à atteindre le contour réel de la pièce, ne suffira pas à araser la grande bavure 15 soit parce que l'effort à appliquer excéderait la capacité du robot 6, soit parce que la programmation du robot 6 ne permet pas de telles profondeurs de passe. Il faudra donc utiliser un autre outil ou araser la grande bavure 15 en plusieurs passes.

Conformément à l'invention, on procède donc à un examen visuel de la surface de la pièce pour déterminer s'il existe des endroits où le contour de la pièce a manifestement été mal rendu. Dans le cas présent, on repère la grande bavure 15. Le procédé consiste à la désigner, ce qui revient concrètement à indiquer ses limites sur la trajectoire réelle de la pièce par le système de désignation 5, par lequel on donne deux points de limite 17 de cette trajectoire.

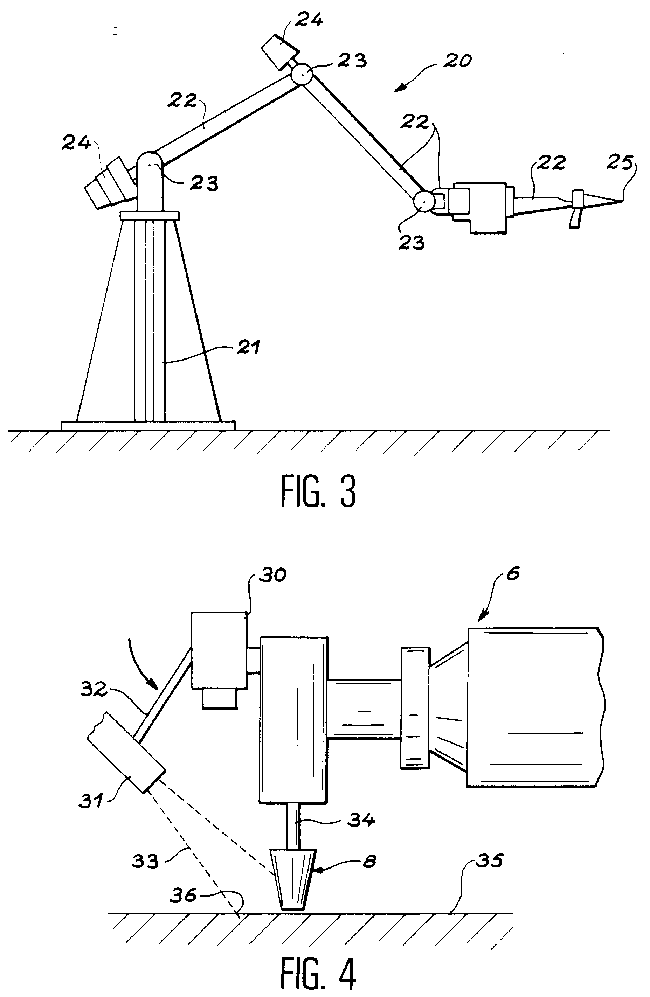

Le système de désignation 5 consiste en des moyens de nature informatique et en une partie matérielle. Cette dernière est généralement commune au système de recalage et accomplit les palpages. Dans une réalisation possible, elle peut consister en un système d'apprentissage connu tel qu'un syntaxeur mécanique 20 (illustré à la figure 3) manipulé par l'opérateur et avec lequel on touche les points de limite 17. En pratique, on touche souvent des points 17°_{g} et 17°_{g} un peu à l'écart de la trajectoire réelle définie à cet endroit par le segment T₁, soit par un défaut de précision du palpage, soit à cause d'une bavure. Les points de limite 17 correspondent alors à la projection orthogonale des points de palpage effectif 17° sur la trajectoire. Un syntaxeur mécanique 20 est un bras de robot monté sur une base fixe 21 et composé de tronçons 22 reliés entre eux et à la base fixe 21 par des articulations 23 à leurs extrémités pour former une chaîne. Ils sont prolongés par des contrepoids 24 du côté de la base fixe 21 pour donner un système équilibré, ou peu s'en faut, quel que soit son état. Les articulations sont équipées de capteurs de position angulaire non représentés qui donnent la position de ses points, et en particulier de son extrémité, à tout instant. Cette extrémité porte un stylet 25 de désignation par lequel on touche les points de limite 17_{g} et 17_{d}. On en déduit leur position en enregistrant les informations des capteurs, et le programme supprime la partie intermédiaire de la trajectoire, qui ne sera donc, dans la réalisation la plus simple de l'invention, pas parcourue par l'outil d'ébavurage. Les points 16 correspondants seront alors simplement retirés de la définition de la trajectoire. On recourra à une étape complémentaire d'usinage, qui pourra consister en un ébavurage à vitesse spéciale ou avec un outil différent, ou, dans d'autres situations, à un meulage, à un polissage ou à un tronçonnage, pour enlever la partie épargnée auparavant. Si la trajectoire est divisée en plusieurs parties disjointes par les endroits irréguliers qui l'interrompent, on peut encore envisager de changer l'ordre de parcours de ces parties par l'outil, en désignant par exemple, pendant une étape finale de programmation qui précède l'action de l'outil, les points de limite 17 qui doivent être atteints successivement, ou l'ordre de parcours des tronçons.

Dans tous les cas, la modélisation doit être complétée en arrêtant les tronçons porteurs d'irrégularités aux points de limite 17. Ici, où la bavure 15 est vers le milieu du segment T₁, celui-ci est divisé en un segment T₅ compris entre les points P'₂ et 17_{g} et un segment T₆ compris entre les points 17_{d} et P'₁. L'ordre de parcours des segments peut devenir T₅, T₂, T₃, T₄ et T₆, de 17_{g} à 17_{d}, si la bavure 15 est usinée avec un autre outil. Elle correspond à un segment T₇ supplémentaire entre les points 17_{d} et 17_{g} si elle est attaquée à la racine. Si elle est usinée avec le même outil que le reste du contour, mais à vitesse réduite, il est plus simple de garder l'ordre de parcours primitif des tronçons, à partir de P'₁, soit de passer successivement par T₆, T₇, T₅, T₂, T₃ en spécifiant simplement le changement de vitesse pour T₇.

On peut concevoir d'utiliser d'autres moyens matériels de désignation en lieu du syntaxeur mécanique 20, comme des capteurs magnétiques ou optiques. Dans le premier cas, on fait toucher les points de limite 17 par une pièce magnétique dont des capteurs fixes détectent la position à tout moment. Quant aux capteurs optiques, certains sont des capteurs globaux qui sont aptes à prendre une image de la pièce et à la rendre sur un écran d'ordinateur. L'opérateur désigne les points sur l'écran par une commande graphique ou par leurs coordonnées.

On peut aussi utiliser un laser mobile associé à une caméra. On fait illuminer la pièce aux points de limite 17 par le faisceau du laser, et on calcule les coordonnées de ces points grâce à la connaissance de l'angle entre le faisceau et l'axe de visée de la caméra.

La coordonnée correspondant à la profondeur peut être déduite avec les autres si on utilise un système tel que celui qui est représenté sur la figure 4. La caméra 30 est liée au robot 6, derrière l'effecteur 8 dont elle prend une image avec un petit biais. Un laser 31 est aussi lié au robot 6, par un bras articulé 32, et il émet un plan lumineux 33 qui fait un angle variable avec l'axe 34 de l'effecteur 8.

On fait toucher la surface 35 de la pièce par l'effecteur 8, et on déplace le laser 31 jusqu'à ce que la trace 36 de sa lumière sur la surface 35 atteigne l'effecteur 8. La position de ce point de concours est parfaitement déterminée grâce à sa position dans le champ de la caméra 30 et à la connaissance de la direction du plan lumineux 33. Un capteur de position angulaire, non représenté, mesure l'état de l'articulation du bras articulé 32 au robot 6.

Ce système mixte, à la fois mécanique et optique, peut devenir purement optique en remplaçant l'effecteur 8 par un second laser émettant un plan lumineux coupant le plan 33. Le procédé consiste alors à déplacer le premier laser 31 pour que les deux faisceaux se coupent à la surface 35. C'est dans tous les cas une triangulation qui est accomplie.

Les points de limite 17 sont ainsi intégrés au fichier des points de recalage 16 pour prolonger un peu la trajectoire de l'outil jusqu'à la grande bavure 15. La trajectoire est remodelée en fournissant des points de remplacement 18 entre les points de limite 17, par une interpolation (la trajectoire passe alors par le segment T₇) ou par d'autres moyens. L'opérateur peut par exemple imposer des points de remplacement 18' sur une portion de trajectoire à l'extérieur du contour de la bielle 10, pour araser la bavure 15 peu à peu.

## Revendications

1. Procédé de génération d'une trajectoire à parcourir par un outil (8) porté par un robot (6) sur la surface d'une pièce (10), comprenant :
· une création d'une modélisation de la trajectoire par des tronçons :
· un recalage de la modélisation de la trajectoire par une reconnaissance de la position de la pièce au moyen d'un instrument de recalage, afin d'obtenir une modélisation recalée ;
· une définition de points de représentation de la trajectoire au moyen de la modélisation recalée ;
caractérisé en ce qu'il comprend encore :
· une reconnaissance visuelle d'endroits irréguliers de la surfaces par lesquels la trajectoire passe ;
· une désignation des endroits irréguliers par des points de limite au moyen d'un instrument de désignation ;
· une projection des points de limite sur la trajectoire ;
· une réfection de la modélisation recalée en arrêtant les tronçons aux points de limite.

2. Procédé de génération d'une trajectoire suivant la revendication 1, caractérisé en ce que les tronçons consistent en des segments définis par deux points d'extrémité et des arcs de cercle définis par deux points d'extrémité et un point intermédiaire.

3. Procédé de génération d'une trajectoire suivant l'une quelconque des revendications 1 ou 2, caractérisé en ce qu'il comprend une réfection de la trajectoire aux endroits irréguliers par une définition de nouveaux points de représentation (18) de la trajectoire aux endroits irréguliers.

4. Procédé de génération d'une trajectoire suivant l'une quelconque des revendications 1 à 3, caractérisé en ce qu'il comprend une interruption de la trajectoire de l'outil à certains au moins des endroits irréguliers et/ou une désignation de tâches particulières associées auxdits endroits.

5. Procédé de génération d'une trajectoire suivant l'une quelconque des revendications 1 à 4, caractérisé en ce que les instruments de recalage et de désignation sont en réalité un instrument mécanique, magnétique ou optique (20, 31, 32, 8) unique.

6. Procédé de génération d'une trajectoire suivant l'une quelconque des revendications précédentes, caractérisé en ce qu'il s'agit d'une trajectoire d'ébavurage et que les endroits irréguliers comprennent des bavures de grande taille (15) ou des parties de la trajectoire sur lesquelles une passe supplémentaire de finition s'avère nécessaire, ou des parties de trajectoire qui doivent subir un traitement spécial tel qu'un tronçonnage.
